Europäisches Patentamt

European Patent Office

Office européen des brevets

(11) Veröffentlichungsnummer: **0 267 461**
**A1**

(12) **EUROPÄISCHE PATENTANMELDUNG**

(21) Anmeldenummer: **87115313.6**

(22) Anmeldetag: **20.10.87**

(51) Int. Cl.4: **B27B 5/06**

(30) Priorität: **25.10.86 DE 3636372**

(43) Veröffentlichungstag der Anmeldung:
**18.05.88 Patentblatt 88/20**

(84) Benannte Vertragsstaaten:
**AT BE CH DE ES FR GB GR IT LI LU NL SE**

(71) Anmelder: **Jenkner, Erwin**
**Lindenstrasse 13**
**D-7261 Gechingen-Bergwald(DE)**

(72) Erfinder: **Jenkner, Erwin**
**Lindenstrasse 13**
**D-7261 Gechingen-Bergwald(DE)**

(74) Vertreter: **Becker, Maria, Dipl.-Phys.**
**Auf dem Haigst 29**
**D-7000 Stuttgart 70(DE)**

(54) **Verfahren zum Zuführen von Werkstückplatten in eine Bearbeitungsmaschine, sowie Einrichtung zur Durchführung des Verfahrens.**

(57) Es wird ein Verfahren beschreiben, mit dessen Hilfe sich Werkstückplatten (20) kontinuierlich einer Bearbeitungsmaschine, beispielsweise einer Platteaufteilsäge (10), zur Verarbeitung zuführen lassen.

Hierzu werden die Werkstückplatten (20, 20a, 20b, 20c) einzeln mittels einer Vorschubvorrichtung (26) der Bearbeitungsmaschine (10) zugeführt und dort von einer weiteren Vorschubvorrichtung (28) - schrittweise zur Verarbeitung weitertransportiert, während die erstgenannte Vorschubvorrichtung (26) in ihre Ausgangsstellung zurückgesteuert wird, eine weitere Werkstückplatte (20b) übernimmt und diese an die sich gegebenenfalls bereits in Bearbeitung befindende Werkstückplatte (20a) anlegt, worauf die weitere Vorschubvorrichtung (28) entgegen der Vorschubrichtung verfahren, mit der weiteren Werkstückplatte (20b) in Eingriff gebracht und anschließend wieder schrittweise in Vorschubrichtung gesteuert wird, und dabei die erstgenannte Vorschubvorrichtung (26) zur erneuten Übernahme einer weiteren Werkstückplatte (20c) wiederum in ihre Ausgangsstellung zurück-und zusammen mit dieser Werkstückplatte (20c) zum Anlegen derselben an die zuvor in Vorschubrichtung transportierte Werkstückplatte (20b) wieder in Vorschubrichtung gesteuert wird, worauf sich das Arbeitsspiel bei beiden Vorschubvorrichtungen (26, 28) wiederholt.

Fig. 1

## Verfahren zum Zuführen von Werkstückplatten in eine Bearbeitungsmaschine, sowie Einrichtung zur Durchführung des Verfahrens

Die Erfindung betrifft ein Verfahren zum Zuführen von Werkstückplatten in eine Bearbeitungsmaschine mit den Merkmalen des Oberbegriffs von Patentanspruch 1.

Gemäß diesem bekannten, druckschriftlich jedoch nicht belegbaren Verfahren, wird die einen Teil der Zuführeinrichtung bildende Vorschubvorrichtung dazu eingesetzt, einzelne, nacheinander beispielsweise aufzuteilende Werkstückplatten, wie kunststoffbeschichtete Preßspanplatten, beispielsweise in eine erste Bearbeitungsposition einer Aufteilsäge zu bringen und anschleißend nach Durchführen eines ersten Trennschnitts die Werkstückplatte schrittweise zur Durchführung weiterer Trennschnitte in Vorschubrichtung weiterzutransportieren.

Die Vorschubvorrichtung wird demgemäß erst nach dem vollständigen Aufteilen einer Werkstückplatte wieder in ihre Ausgangslage zurückgesteuert, um dann eine weitere Werkstückplatte der Bearbeitungsmaschine zuzuführen. Damit entsteht nach Aufbrauchen einer aufgeteilten Werkstückplatte in der Bearbeitungsmaschine bis zur erneuten Bereitstellung einer aufzuteilenden Werkstückplatte an der Bearbeitungsmaschine Totzeit, die aus den Zeiten resultiert, die die Vorschubvorrichtung zu ihrer Rücksteuerung in ihre Ausgangslage über eine Länge von mehreren Metern zur anschließenden Übernahme einer bereitgestellten neuen Werkstückplatte und zum Hintransport derselben in die Bearbeitungsmaschine benötigt.

Der Erfindung liegt die Aufgabe zugrunde, ein Verfahren mit den im Oberbegriff des Patentanspruchs 1 erläuterten Merkmalen so zu gestalten, daß bei der sereinmäßigen Verarbeitung von Werkstückplatten diese an der Bearbeitungsmaschine zu ihrer Verarbeitung kontinuierlich bereitgestellt und zugeführt werden.

Diese Aufgabe wird erfindungsgemäß durch die kennzeichnenden Verfahrensmerkmale des Patentanspruchs 1 gelöst.

Durch das Zusammenspiel der beiden Vorschubvorrichtungen wird somit einer zu deren Verarbeitung schrittweise in Vorschubrichtung transportierenden Werkstückplatte während ihrer Verarbeitung eine weitere Werkstückplatte nachgeschoben bzw. an sie angelegt und in der Folge beide Werkstückplatten gemeinsam schrittweise weiterbefördert, wobei mit der einen Vorschubvorrichtung nach einer gewissen Verarbeitung der zuletzt vorgeschobenen Werkstückplatte stets wieder eine neue Werkstückplatte nachgeschoben und somit eine Verarbeitung einzelner Werkstückplatten in ununterbrochener Folge ermöglicht wird.

Dabei kann mit Hilfe der jeweils eine neue Werkstückplatte nachschiebenden Vorschubvorrichtung nach In-Berührung-Bringen beider Werkstückplatten miteinander gemäß Anspruch 2 mindestens noch ein Vorschubschritt für eine Bearbeitungs-operation durchgeführt werden, währenddem die andere Vorschubvorrichtung zur Übernahme der an das Plattenreststück angelegten Werkstückplatte in ihre Ausgangslage zurück-und anschließend schrittweise wieder in Vorschubrichtung gesteuert wird, oder es kann auch gemäß Anspruch 3 die erstgenannte Vorschubvorrichtung die Werkstückplatte bis in eine erste Bearbeitungsstellung der Bearbeitungsmaschine zufördern und in dieser Bearbeitungsstellung die weitere Vorschubvorrichtung mit der Werkstückplatte in Eingriff und zur Durchführung der ersten Vorschubbewegung die erstgenannte Vorschubvorrichtung mit dieser außer Eingriff gebracht und in deren Ausgangsstellung zurückgesteuert werden.

Die Zuordnung der beiden Vorschubvorrichtungen zur Transportebene der Werkstückplatten kann dabei beliebig sein. Ein oberflächenschonender Plattenvorschub läßt sich hierbei nach Anspruch 4 bewerkstelligen, wobei sich in konstruktiver Hinsicht ein besonders günstiger Verfahrensablauf nach Anspruch 5 erreichen läßt.

Das erfindungsgemäße Verfahren läßt sich vorteilhaft mittels einer Einrichtung nach Anspruch 6 durchführen.

Günstige Ausgestaltungen dieser Einrichtung hinsichtlich Arbeitsweise und konstruktiver Ausbildung sind Gegenstand der Ansprüche 7 und 8.

Weitere Merkmale und Einzelheiten der Erfindung sind in der sich anschließenden Beschreibung einer in der Zeichnung gezeigten Einrichtung zur Durchführung des erfindungsgemäßen Verfahrens erläutert.

In der Zeichnung zeigen in schematischer Darstellung:

Fig. 1 in der Sietenansicht eine Plattenaufteilsäge mit einer dieser vorgeschalteten Plattenzuführeinrichtung, wobei sich beide Vorschubvorrichtungen derselben in ihrer Ausgangsstellung befinden;

Fig. 2-6 Darstellungen ähnlich Fig. 1, in welchen die verschiedenen Verfahrensschritte zur kontinuierlichen Verarbeitung von Werkstückplatten in der Plattenaufteilsäge veranschaulicht sind.

In den einzelnen Figuren bezeichnet 10 als Ganzes eine Plattenaufteilsäge, von der lediglich der einen Sägeschlitz 12 aufweisende Maschinentisch 14 dargestellt ist, in welchem unterhalb seiner Werkstückauflagefläche 16 in bekannter Weise ein Sägeaggregat senkrecht zur Zeichenebene verschiebbar geführt ist, dessen Kreissägeblatt innerhalb des Sägeschlitzes 12 nach oben aus der Werkstückauflagefläche 16 zum Aufteilen von Werkstückplatten aufzutauchen vermag.

Der Plattenaufteilsäge 10 ist eine als Ganzes mit 18 bezeichnete Zuführeinrichtung vorgeschaltet, mit deren Hilfe auf der Plattenaufteilsäge 10 aufzuteilende Werkstückplatten 20 dieser in kontinuierlicher Folge zuführbar sind. Diese Zuführung 18 weist einen Plattenhubtisch 20 auf, mit dessen Hilfe ein Stapel von Werkstückplatten während ihrer Verarbeitung so angehoben wird, daß sich jeweils die auf diesem Plattenstapel verbleibende obenliegende Werkstückplatte 20 in einer Vorschubebene 24 befindet.

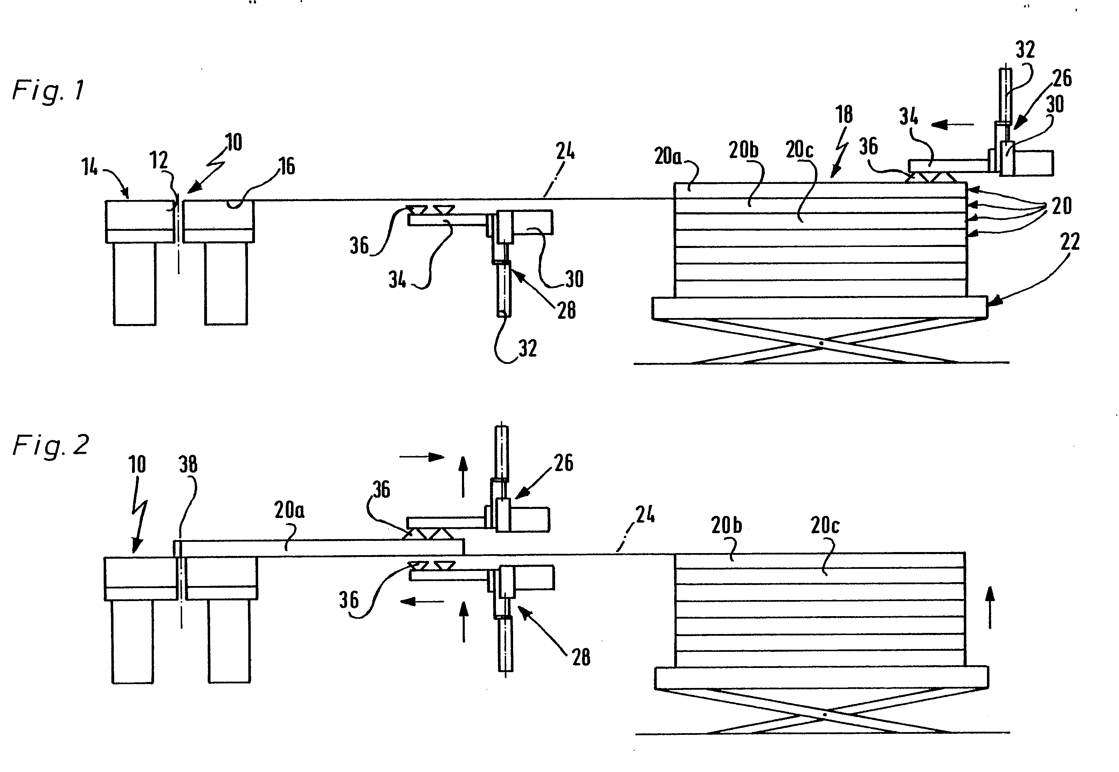

Die Zuführeinrichtung 18 weist ferner zwei Vorschubvorrichtungen 26 und 28 auf, von denen sich die erstgenannte in ihrer in Fig. 1 gezeigten Ausgangsstellung im Bereich des Plattenhubtisch-Hinterendes befindet, während sich die andere Vorschubvorrichtung 28 in ihrer Ausgangsstellung zwischen der Plattenaufteilsäge 10 und dem Plattenhubtisch 22 befindet. Die Vorschubvorrichtung 26 ist dabei oberhalb und die Vorschubvorrichtung 28 unterhalb der Vorschubebene 24 in Richtung Plattenaufteilsäge 10 sowie in entgegengesetzter Richtung steuerbar.

Beide Vorschubvorrichtungen 26, 28 sind konstruktiv gleich ausgelegt. Sie weisen an einem sich senkrecht zur Zeichenebene erstreckenden - schienenartigen Trägerschlitten 30 vorzugsweise mindestens zwei in seitlichem Abstand voneinander vorgesehene, mittels eines beispielsweise pneumatisch betätigbaren Zylinders 32 anheb-und absenkbare, sich in Vorschubrichtung erstreckende leistenartige Mitnehmer 34 auf, die an ihrer der Vorschubebene 24 zugekehrten Seite in Vorschubrichtung hintereinander beispielsweise zwei Saugnäpfe 36 tragen, die mit einer Unterdruckquelle verbindbar sind.

Mit Hilfe der erläuterten Zuführeinrichtung 18 ist das erfindungsgemäße Verfahren wie folgt durchführbar:

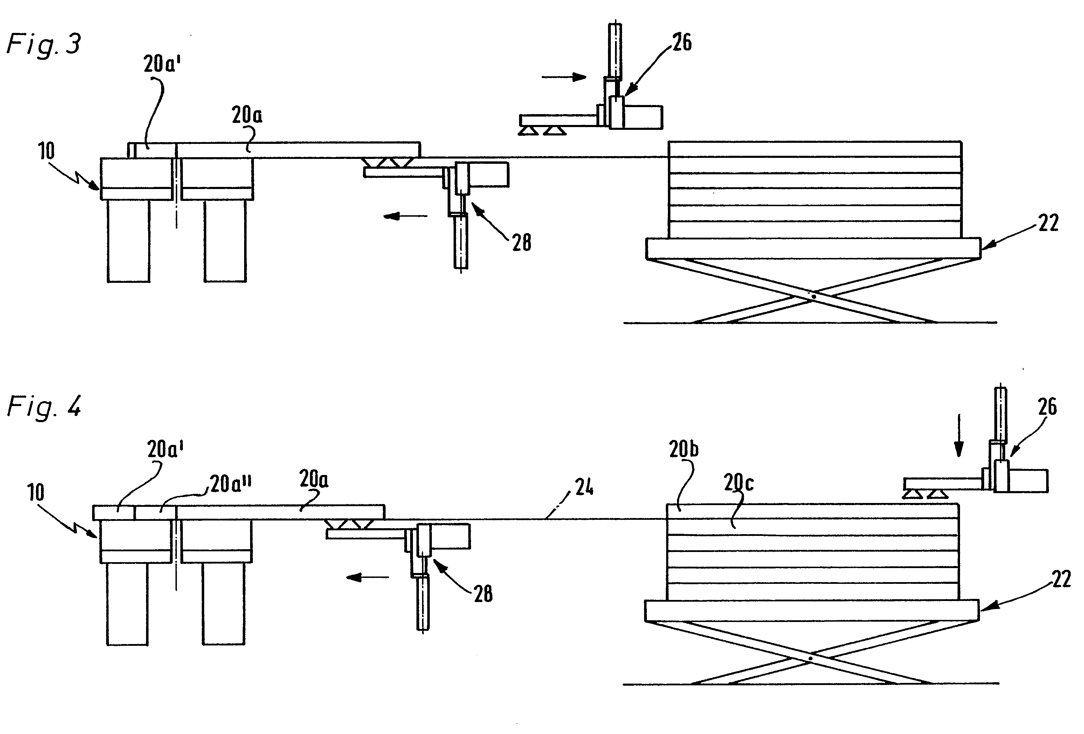

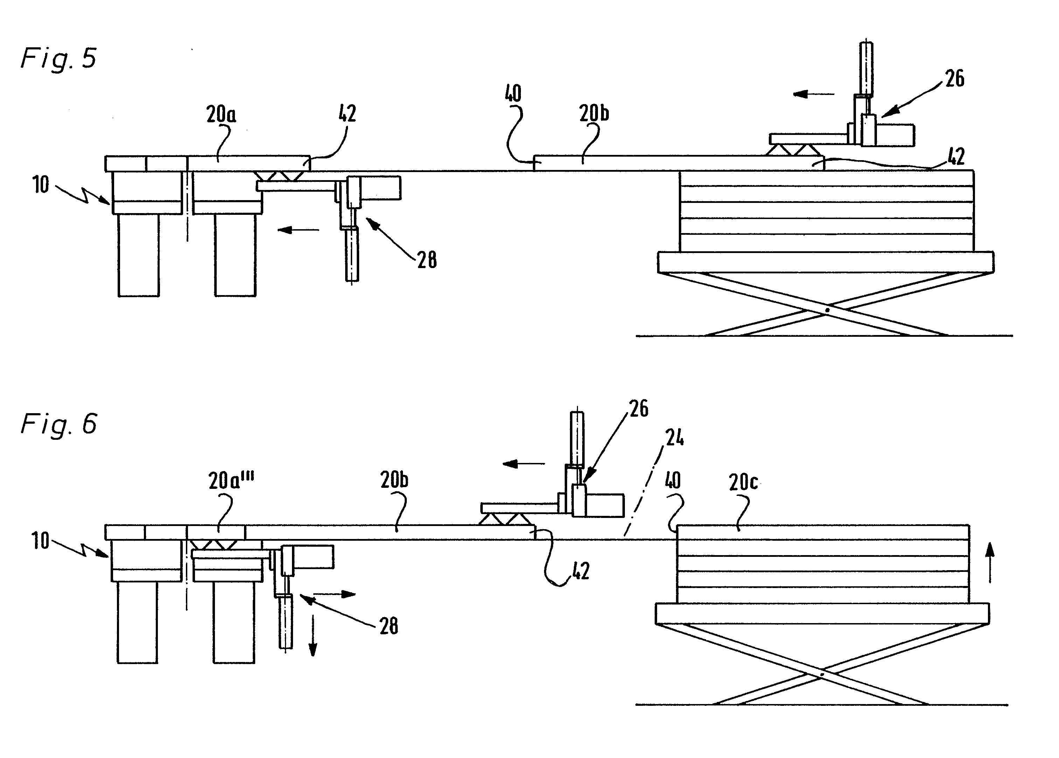

Um einzelne Werkstückplatten 20 des auf dem Plattenhubtisch 22 aufgebrachten Plattenstapels in der Plattenaufteilsäge kontinuierlich in Plattenteilstücke vorbestimmter Breite aufteilen zu können, ist die sich in ihrer Ausgangsstellung befindende Vorschubvorrichtung 26 mit ihren Saugnäpfen 36 auf die obere Flachseite der oberen Werkstückplatte 20a des Plattenstapels abzusenken, wobei durch Erzeugen eines Unterdrucks in den Saugnäpfen 36 diese mit der Werkstückplatte 20a in Eingriff zu bringen sind. Danach ist mittels der Vorschubvorrichtung 26 die Werkstückplatte 20a der Plattenaufteilsäge 10 zuzuführen, und zwar beispielsweise in eine erste Bearbeitungsstellung gemäß Fig. 2 zur Durchführung eines ersten Besäumschnitts 38. Danach wird zur Durchführung dieses Besäumschnitts die Werkstückplatte 20a in üblicher Weise auf der Plattenaufteilsäge 10 festgespannt. Nach Spannen der Werkstückplatte 20a wird der Unterdruck in den Saugnäpfen 36 der Vorschubvorrichtung 26 aufgehoben und diese von der Werkstückplatte 20a abgehoben und in ihre Ausgangslage zurückgesteuert (Fig. 3). Zugleich werden die Saugnäpfe 36 der Vorschubvorrichtung 28 an die Unterseite der Werkstückplatte 20a angelegt und mittels Unterdruck mit dieser in Eingriff gebracht. Ist der Besäumschnitt 38 durchgeführt, so übernimmt die Vorschubvorrichtung 28 den - schrittweisen Vorschub zum Aufteilen der Werkstückplatte 20a in Plattenteilstücke 20a', 20a" gleicher oder unterschiedlicher Breite. Zwischenzeitlich nimmt die Vorschubvorrichtung 26 wieder ihre anfängliche Ausgangslage ein, und eine weitere Werkstückplatte 20b ist mittels des Hubtisches 22 in die Plattenvorschubebene 24 angehoben worden (Fig. 4), um diese, wie Fig. 5 zeigt, mit Hilfe der Vorschubvorrichtung 26 so lange in Vorschubrichtung zu transportieren, bis sie mit ihrer vorderen Plattenkante 40 an der hinteren Plattenkante 42 des Plattenreststücks der Werkstückplatte 20a zur Anlage kommt. Während des Vorschubs der Werkstückplatte 20b wird die Werkstückplatte 20a kontinuierlich in Plattenteilstücke aufgeteilt, wobei das Plattenaufteilen und der Plattenvorschub aufeinander beispielsweise so abgestimmt sind, daß bei In-Berührung-Kommen der beiden Plattenkanten 40, 42 die Werkstückplatte 20a bereits vollkommen aufgeteilt und demgemäß das verbleibende Plattenreststück 20a" eine gewünschte Breite aufweist. Nach In-Berührung-Kommen des Plattenreststücks 20a" mit der neu zugeführten Werkstückplatte 20b wird die Vorschubvorrichtung 28 in ihre in Fig. 1 und 2 gezeigte Ausgangsstellung zurückgesteuert und mit ihren Saugnäpfen 36 mit der Unterseite der Werkstückplatte 20b in Eingriff gebracht, während die Vorschubvorrichtung 26 von dieser abgehoben und wieder in ihre in Fig. 1 und 4 gezeigte Ausgangsstellung zum erneuten Zuführen einer Werkstückplatte 20c zurückgesteuert wird. Währenddessen übernimmt die Vorschubvorrichtung 28 den schrittweisen Vorschub der Werkstückplatte 20b, wobei zugleich das Plattenteilstück 20a" der vorausgegangenen Werkstückplatte 20a aus der Bearbeitungszone der Plattenaufteilsäge 10 herausgeschoben wird.

Zwischenzeitlich wurde die Werkstückplatte 20c in die Vorschubebene 24 angehoben und wird in der erläuterten Weise mittels der Vorschubvorrichtung 26 gemäß dem Fig. 5 und 6 in Vorschubrichtung transportiert und an die hintere Kante 42 der zwischenzeitlich zum größten Teil oder gänzlich aufgeteilten Werkstückplatte 20b angelegt und danach für den schrittweisen Vorschub von der Vorschubvorrichtung 28 übernommen.

Das Arbeitsspiel der beiden Vorrichtungen 26, 28 im Zusammenwirken mit dem Hubwagen 22 und der Plattenaufteilsäge 10 kann programmgesteuert optimal abgestimmt werden.

## Ansprüche

1. Verfahren zum Zuführen von Werkstückplatten in eine Bearbeitungsmaschine, beispielsweise eine Aufteilsäge, bei dem Werkstückplatten einzeln einer der Bearbeitungsmaschine vorgeschalteten Zuführeinrichtung übergeben, von einer Vorschubvorrichtung erfaßt, der Bearbeitungsmaschine zugeführt und die Vorschubvorrichtung nach Durchfahren eines maximalen Vorschubweges zwecks Übernahme einer weiteren zu verarbeitenden Werkstückplatte in ihre Ausgangslage zurückgesteuert wird,
**dadurch gekennzeichnet,**
daß
a) die Vorschubvorrichtung (26) nach Transportieren der Werkstückplatte (20a) über einen bestimmten Vorschubweg in ihre Ausgangsstellung zurückgesteuert und
b) die Werkstückplatte (20a) durch eine weitere Vorschubvorrichtung (28) schrittweise weitertransportiert wird, daß
c) eine weitere, der Zuführeinrichtung (18) übergebene Werkstückplatte (20b) von der erstgenannten Vorschubvorrichtung (26) übernommen und an die sich gegebenenfalls bereits in Bearbeitung befindliche Werkstückplatte (20a) angelegt wird, daß
d) anschleißend insbesondere während einer Bearbeitungsoperation die erstgenannte Vorschubvorrichtung (26) zur Übernahme einer weiteren Werkstückplatte (20c) wieder in ihre Ausgangsstellung zurückgesteuert und
e) zur gemeinsamen Fortsetzung des Vorschubs von verbleibender Restplatte (20a''') und vorgeschobener weiterer Werkstückplatte (20b) die weitere Vorschubvorrichtung (28) entgegen der Vorschubrichtung verfahren, mit der weiteren Werkstückplatte (20b) in Eingriff gebracht und anschließend wieder schrittweise in Vorschubrichtung gesteuert wird, und daß
f) im Verlauf der Bearbeitung der weiteren Werkstückplatte (20b) an diese mittels der erstgenannten Vorschubvorrichtung (26) die neu zugeführte Werkstückplatte (20c) angelegt wird, worauf sich das Arbeitsspiel der beiden Vorschubvorrichtungen (26, 28) wiederholt.

2. Verfahren nach Anspruch 1, dadurch gekennzeichnet, daß die erstgenannte Vorschubvorrichtung (26) nach Anlegen einer weiteren Werkstückplatte (20b) an das Plattenreststück (20a''') nach Abschluß einer Bearbeitungsoperation mindestens einen Vorschubschritt für eine weitere Bearbeitungsoperation durchführt, während dem die weitere Vorschubvorrichtung (28) zur Übernahme der an das Plattenreststück (20a''') angelegten Werkstückplatte (20b) in ihre Ausgangslage zurück-und anschließend wieder schrittweise in Vorschubrichtung gesteuert wird.

3. Verfahren nach Anspruch 1, dadurch gekennzeichnet, daß die erstgenannte Vorschubvorrichtung (26) die Werkstückplatte (20a) bis in eine erste Bearbeitungsstellung der Bearbeitungsmaschine (10) zufördert, in dieser Bearbeitungsstellung die weitere Vorschubvorrichtung (28) mit der Werkstückplatte (20a) in Eingriff und zur Durchführung des ersten Vorschubschrittes die erstgenannte Vorschubvorrichtung (26) mit dieser außer Eingriff gebracht und in deren Ausgangsstellung zurückgesteuert wird.

4. Verfahren nach einem der vorhergehenden Ansprüche, dadurch gekennzeichnet, daß beide Vorschubvorrichtungen (26, 28) durch Ansaugen mit den Werkstückplatten (20a, 20b, 20c) in Eingriff gebracht werden.

5. Verfahren nach einem der vorhergehenden Ansprüche, dadurch gekennzeichnet, daß die die erste Vorschubbewegung ausführende Vorschubvorrichtung (26) mit der Oberseite und die die schrittweisen Vorschubbewegungen ausführende Vorschubvorrichtung (28) mit der Unterseite von Werkstückplatten (20a, 20b, 20c) in Eingriff gebracht werden.

6. Einrichtung zur Durchführung des Verfahrens nach einem der vorhergehenden Ansprüche, gekennzeichnet durch zwei Vorschubvorrichtungen (26, 28) von denen die eine oberhalb und die andere unterhalb der Transportebene (24) einer Zuführeinrichtung (18) angeordnet ist, daß die Ausgangsstellung der unteren Vorschubvorrichtung (28) zwischen einer Abstapelvorrichtung (22) der Zuführeinrichtung (18) und der Bearbeitungsmaschine (10), und die Ausgangsstellung der oberen Vorschubvorrichtung (26) hinter der Abstapelvorrichtung (22) liegt, und daß die Werkstückplatte (20a) nach erfolgtem Transport durch die obere Vorschubvorrichtung (26) zur Bearbeitungsmaschine (10) durch die untere Vorschubvorrichtung (28) schrittweise weitertransportierbar ist.

7. Einrichtung nach Anspruch 6, zum Zuführen von in einer Aufteilsäge aufzuteilender Werkstückplatten, dadurch gekennzeichnet, daß mittels der oberen Vorschubvorrichtung (28) eine Werkstückplatte (20a) kontinuierlich bis in eine Position zur Durchführung eines ersten Besäumschnitts (38) transportierbar, in dieser Position die untere Vorschubvorrichtung (28) mit der Werkstückplatte (20a) in Eingriff bringbar und die obere Vorschubvorrichtung (26) in ihre Ausgangslage zurücksteuerbar ist.

8. Einrichtung nach Anspruch 6 oder 7, dadurch gekennzeichnet, daß beide Vorschubvorrichtungen (26, 28), quer zur Vorschubrichtung gesehen, je mindestens zwei in seitlichem Abstand voneinander angeordnete, je mindestens einen an die Werkstückplatten (20) anlegbaren und von diesen abhebbaren, mit einer Unterdruckquelle verbindbaren Saugnapf (36) tragenden Mitnehmer (34) aufweisen.

Fig. 1

Fig. 2

0 267 461

*Fig. 3*

20a'

20a

10

→

26

←

28

22

*Fig. 4*

20a'

20a''

20a

20b

20c

24

26

10

←

28

22

0 267 461

Fig. 5

Fig. 6

# EUROPÄISCHER RECHERCHENBERICHT

| | EINSCHLÄGIGE DOKUMENTE | | EP 87115313.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | US - A - 3 768 352 (CAMPBELL) <br> * Fig. 9,10 * <br> -- | 1,6 | B 27 B 5/06 |
| A | DE - A1 - 2 840 677 (JENKNER) <br> * Gesamt * <br> ---- | | |

| RECHERCHIERTE SACHGEBIETE (Int. Cl.4) |
|---|
| B 27 B <br> B 65 G |

Der vorliegende Recherchenbericht wurde für alle Patentansprüche erstellt.

| Recherchenort | Abschlußdatum der Recherche | Prüfer |
|---|---|---|
| WIEN | 14-12-1987 | TRATTNER |